# DEMANDE DE BREVET EUROPEEN

(11) **EP 4 613 092 A1**
(43) Date de publication de la demande: **10.09.2025**
(21) Numéro de dépôt: 25161222.2
(22) Date de dépôt: 03.03.2025
(51) Int. Cl.: A01G 13/27, A01G 13/28, A01G 17/02

(54) **MANCHON DE PROTECTION POUR BRANCHE VÉGÉTALE**

(30) Priorité: 07.03.2024 FR 2402282
(71) Demandeur: Pahaut, Vincent, 33850 Léognan (FR)
(72) Inventeur: Pahaut, Vincent, 33850 Léognan (FR)
(74) Mandataire: Argyma

(57) **Abrégé**

L'invention concerne un manchon (1) de protection détachable pour branche (2) de végétal, notamment pour branche de vigne, ledit manchon (1) comprenant un corps (10) configuré pour être placé autour de ladite branche (2) et des organes de fixation (11) complémentaires montés sur ledit corps (10) et permettant de fixer le corps (10) autour de ladite branche (2) de manière détachable, ledit corps (10) étant perméable à l'air et comprenant un matériau anti-ultraviolets.

## Description

### [Domaine technique]

La présente invention se rapporte au domaine de l'agriculture et concerne plus particulièrement un moyen de protection des végétaux, notamment des vignes.

### [Etat de la technique antérieure]

Il est important dans le domaine de la viticulture de protéger les vignes de différents types de risques qui menaceraient les récoltes et la production de vin.

Parmi ces risques, celui du gel est particulièrement important, notamment en hiver. En effet, à cette saison, les bourgeons commencent à se développer sur les branches s'étendant des pieds de vigne, appelées « astes », et en cas de basses températures pendant la nuit, ils peuvent geler. Le gel, en abîmant les cellules du végétal, abîme les bourgeons jusqu'à éventuellement stopper leur développement. Sans le développement normal des bourgeons la récolte de fruits se trouve amoindrie.

De nombreuses solutions à ce problème ont déjà été proposées.

Par exemple, il est connu d'utiliser classiquement des bougies disposées dans les rangs de vignes pour réchauffer l'air et éviter le gel. Une telle solution nécessite toutefois une longue installation, notamment car il faut allumer les bougies. En outre, les flammes des bougies peuvent s'éteindre, notamment en cas de vent important, ce qui peut conduire au gel des branches et bourgeons avoisinants.

Afin de pallier ces problèmes, d'autres dispositifs de chauffage ont été proposés. Par exemple, le document US4662105 propose un dispositif planté dans le sol près des racines d'un végétal permettant d'utiliser l'énergie du sol irradié de la chaleur à proximité dudit végétal. Un tel dispositif ne permet cependant pas de protéger efficacement du gel les bourgeons des vignes quand le sol est trop froid.

Il existe également des dispositifs de chauffage à gaz, permettant d'apporter de l'air chaud et empêcher la formation du gel, et des solutions utilisant des câbles électriques chauffants, comme décrit par exemple dans les documents FR2754672A1 ou FR2687896A1. Toutefois, ces dispositifs sont complexes et chronophages à installer et consomment beaucoup d'énergie pour fonctionner, ce qui les rend particulièrement onéreux. Les solutions à gaz peuvent en outre s'avérer notablement polluantes.

L'utilisation d'un hélicoptère ou l'utilisation de tours antigel à ventilateur sont également connues et permettent de balayer l'air au-dessus des vignes pour les réchauffer de quelques degrés et éviter ainsi les dommages causés par le gel. Ces solutions s'avèrent significativement complexes et coûteuses à mettre en oeuvre, du fait du coût du vol de l'hélicoptère ou de l'énergie électrique alimentant les ventilateurs des tours antigel, et particulièrement polluantes dans le cas de l'hélicoptère du fait du kérosène utilisé.

Par ailleurs, des solutions de protection passives ont été développées, à base de voiles, de bâches ou de panneaux pour recouvrir les vignes. Etant donné que ces solutions n'ont pas de consommation active (de courant, de carburant...), elles résolvent une partie des inconvénients des solutions précitées.

Par exemple, le document US2022/0124988A1 décrit un système de panneaux permettant de protéger les vignes de la pluie, de la grêle et du vent tout en permettant un apport de lumière solaire. Toutefois, ce système ne permet pas de lutter contre le gel.

Le document US2020/0045895A1 décrit une chambre de croissance pour pied de vigne. Cette chambre consiste en un contenant tubulaire évasé dans sa partie supérieure, disposé verticalement, qui permet de protéger le pied de vigne du froid tout en concentrant l'énergie solaire. Ce dispositif peut toutefois s'avérer long à installer et coûteux à fabriquer. En outre, il ne protège pas les bourgeons des eaux de pluie, ni de la grêle, qui peuvent les endommager en tombant ou entrainer un stockage d'humidité dans le contenant pouvant amener à un pourrissement des bourgeons. Enfin, la concentration des rayons solaires peut provoquer un chauffage exacerbé de la vigne, pouvant l'endommager.

Une autre solution décrite dans le document CH180600 consiste à utiliser un voile positionné autour d'un piquet vertical et sur le pied de vigne. Ce voile est réalisé en matière transparente, souple et imperméable et est placé par-dessus la partie de la plante à protéger à la manière d'une robe. Ainsi, la plante est chauffée par la lumière du soleil, le voile n'abîme pas les bourgeons et la plante est sensiblement protégée des eaux de pluie, de la grêle et du gel.

Cependant, avec cette solution, la plante ne respire pas et de la condensation peut se former à l'intérieur du voile, ce qui peut entrainer un pourrissement de la plante et notamment des bourgeons. En outre, le gel des bourgeons dans la nuit, suivi de l'exposition du voile transparent au soleil le matin peut conduire à un réchauffement et donc à un dégel trop rapide des bourgeons, ce qui les peut les endommager de manière importante.

Il existe donc un besoin d'une solution simple et efficace permettant de remédier au moins en partie à ces inconvénients.

### [Exposé de l'invention]

A cette fin, l'invention concerne un manchon de protection détachable pour branche de végétal, notamment pour branche de vigne, ledit manchon comprenant un corps configuré pour être placé autour de ladite branche, ledit corps étant perméable à l'air et anti-ultraviolets.

Par les termes « le corps étant perméable à l'air », on entend que l'air peut traverser l'épaisseur dudit corps.

Par les termes « le corps étant ... anti-ultraviolets », on entend que le corps bloque les rayons ultraviolets, par exemple en comportant ou étant constitué d'un matériau anti-ultraviolets ou en comportant un revêtement anti-ultraviolets.

Le manchon selon l'invention permet de protéger physiquement la branche des intempéries comme la grêle et le vent et réduit le risque de gel en période froide sans nécessiter la consommation de courant ou de carburant. Lorsque du gel se forme quand même sur les bourgeons de la branche, par exemple pendant la nuit, la propriété anti-ultraviolets du matériau évite que le jour suivant, les rayons solaires ne réchauffent trop rapidement la branche. Cet amortissement de la montée en température dans le manchon permet un dégel lent des bourgeons qui les préserve. La perméabilité à l'air permet d'éviter un pourrissement des bourgeons causé par une stagnation de l'air ou une accumulation de condensation dans le manchon.

De préférence, le corps comprend une ou plusieurs couches de matériau.

De préférence, le corps est constitué d'un matériau à la fois perméable à l'air et anti-ultraviolets.

Dans une forme de réalisation, le corps est constitué d'une couche de matériau perméable à l'air et d'un revêtement anti-ultraviolets, de préférence appliqué sur sa surface externe, également perméable à l'air.

De façon préférentielle, le corps comprend des organes de fixation complémentaires montés sur ledit corps et permettant de fixer le corps autour de ladite branche de manière détachable. Ces organes de fixation permettent d'assurer le maintien du manchon autour de la branche et d'éviter qu'il tombe sous l'effet du vent ou de la gravité.

Avantageusement, les organes de fixation complémentaires sont disposés le long de deux côtés longs du corps. Le manchon est ainsi plus aisé à fermer, et avoir les organes de fixation sur les côtés longs est plus pratique puisque les branches, notamment dans le cas de branches de vignes, peuvent s'étendre en longueur sur une distance plus grande que celle nécessaire pour entourer la branche.

Avantageusement, les organes de fixation sont au nombre de deux ou trois, ce qui permet à la fois une fixation solide du manchon afin d'éviter qu'il ne se détache de la branche tout en permettant une fixation et un retrait rapides du manchon.

Dans une forme de réalisation, les organes de fixation complémentaires comprennent au moins un système de bouton-fermoir aimanté, qui est une fixation à la fois simple à utiliser, rapide à mettre en place et à défaire, et solide.

En variante ou en complément, les organes de fixation complémentaires comprennent au moins deux bandes complémentaires en matériau auto-agrippant, rapidement attachables et détachables et solides.

En variante encore, les organes de fixation peuvent être des boutons-pressions, des crochets, des fermetures à glissière, des dispositifs de fentes et de languettes, notamment en forme de flèche, etc.

Avantageusement, le corps du manchon est imperméable à l'eau et à d'autres liquides. Ainsi, il y a moins d'eau qui pénètre à l'intérieur du manchon, que ce soit de l'eau de pluie ou de l'eau de condensation, et qui pourrait geler sur les bourgeons. Le corps peut être rendu imperméable soit en utilisant un matériau possédant cette propriété ou en appliquant sur la surface extérieure dudit corps un traitement hydrophobe.

Dans une forme de réalisation préférentielle, le corps est constitué d'un matériau souple ou semi-rigide. La pose et le retrait du manchon est ainsi simplifiée, ce qui en plus réduit le risque d'abîmer les bourgeons en cas de contact avec le corps du manchon lors de la pose ou si un opérateur ou un tracteur entre en contact avec le corps.

De préférence, le corps est composé de plusieurs couches de polypropylène superposées les unes sur les autres.

Dans une forme de réalisation, le corps comporte une couche constituée d'un matériau anti-ultraviolets ou dans lequel la surface externe du corps est recouverte d'un revêtement anti-ultraviolets pour ralentir le dégel de manière efficace.

Dans une forme de réalisation avantageuse, le corps du manchon de protection comprend un matériau flexible à mémoire de forme, ledit matériau ayant en mémoire la forme du manchon enroulé autour de ladite branche. De cette façon, l'installation et le retrait du manchon se font de façon simple et rapide pour l'utilisateur. Cet avantage est particulièrement pertinent lorsque le nombre de manchons à installer est très important, par exemple dans le cas d'exploitations viticoles.

Dans une autre forme de réalisation, le corps comprend une pluralité de coques rigides ou semi-rigides reliées par au moins une articulation. Ces coques rigides, préférentiellement au nombre de deux, permettent de former un cylindre rigide, augmentant la protection des bourgeons face à la pluie, à la grêle et aux chocs.

Avantageusement, les coques comprennent des armatures en plastique ou en métal sur lesquelles sont fixées une ou plusieurs couches de matériau qui assurent les propriétés recherchées du manchon. Par exemple, ces couches peuvent être réalisées en polypropylène.

De préférence, l'au moins une articulation comprend au moins une charnière pour une articulation aisée.

Avantageusement, le corps est réalisé à partir d'un patron géométrique de forme rectangulaire, qui est facile à fabriquer et à mettre en forme. De plus, une fois replié, le corps forme un cylindre ouvert à ses deux extrémités, ce qui permet la circulation de l'air à l'intérieur et évite donc que de la condensation y stagne.

Avantageusement encore, le patron géométrique de forme rectangulaire peut plus facilement être composé de plusieurs couches qui chacune assurent une propriété du manchon, notamment la protection physique contre les chocs, l'imperméabilité aux liquides et la perméabilité à la vapeur d'eau.

L'invention concerne également un procédé d'utilisation d'un manchon tel que présenté, ledit procédé comprenant une étape de placement du corps du manchon autour de la branche à protéger et d'attachement des organes de fixation pour fixer le manchon autour de la branche.

Le procédé comprend en outre une étape de détachement des organes de fixation pour et une étape de retrait du manchon de la branche pour réexposer la branche à l'air libre quand la saison le permet.

### [Description des dessins]

D'autres caractéristiques et avantages de l'invention apparaîtront encore à la lecture de la description qui va suivre. Celle-ci est purement illustrative et doit être lue en regard des dessins annexés sur lesquels :
[Fig 1] La figure 1 illustre schématiquement une branche de végétal fixée sur un fil métallique et dépourvue de manchon selon l'invention.
[Fig 2] La figure 2 illustre schématiquement une première forme de réalisation du manchon selon l'invention, protégeant une branche de végétal fixée sur un fil métallique.
[Fig 3] La figure 3 illustre schématiquement le manchon de la figure 2 déroulé à plat.
[Fig 4] La figure 4 illustre schématiquement une deuxième forme de réalisation du manchon selon l'invention, comprenant deux coques ouvertes.
[Fig 5] La figure 5 illustre schématiquement une troisième forme de réalisation du manchon selon l'invention, dont le corps comprend un matériau flexible à mémoire de forme.
[Fig 6] La figure 6 illustre schématiquement l'installation d'un manchon selon l'invention recouvrant une pluralité de branches de pieds de vigne.
[Fig 7] La figure 7 illustre schématiquement illustre schématiquement l'installation de manchons, recouvrant chacun une seule branche des pieds de vigne.
[Fig 8] La figure 8 illustre schématiquement le procédé de fixation et de retrait du manchon selon l'invention.

### [Description des modes de réalisation]

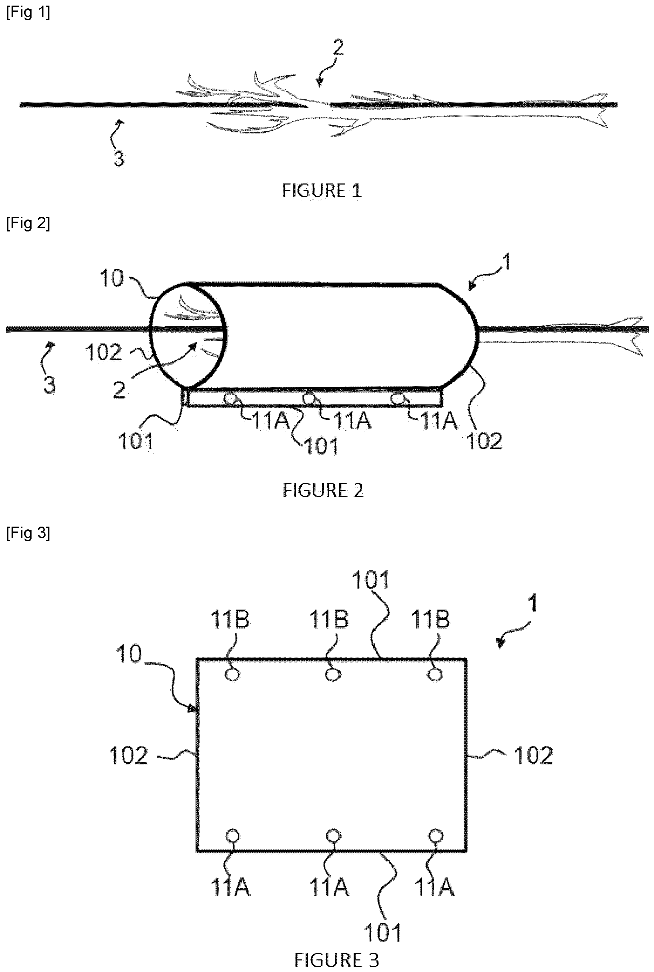

Le manchon 1 de protection est configuré pour assurer la protection d'une branche 2 de végétal, notamment de vigne (appelée « aste ») représentée en exemple sans le manchon 1 sur la figure 1.

### Manchon 1

Le manchon 1 est configuré pour être placé autour de la branche 2, comme illustré par exemple sur les figures 2, 6 et 7.

En référence aux figures 2 à 4, le manchon 1 comprend un corps 10 et une pluralité d'organes de fixation 11.

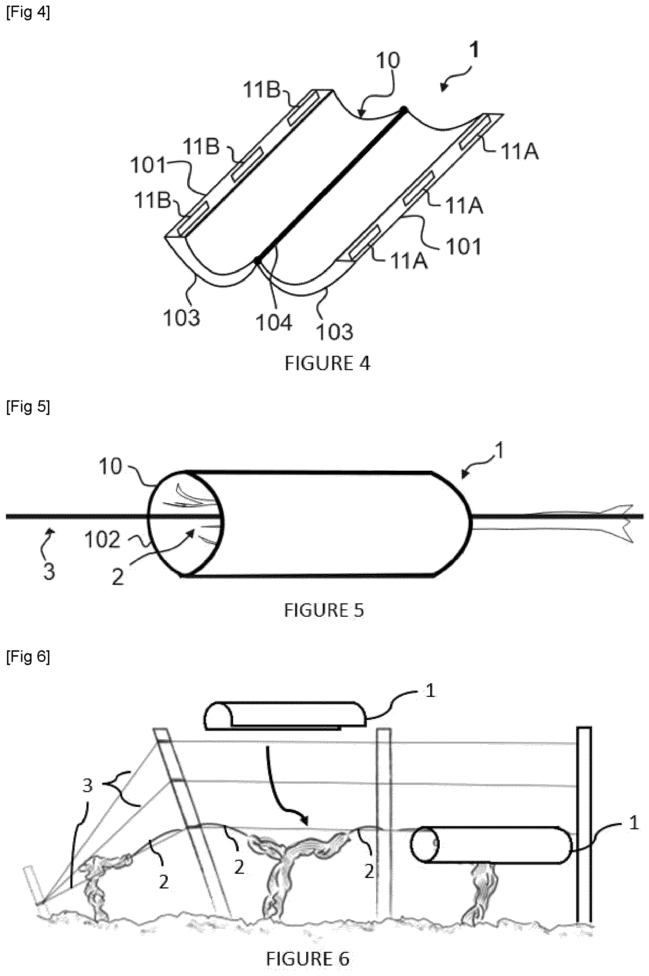

Le manchon 1 peut varier en longueur. Comme représenté sur la figure 6, un manchon 1 peut recouvrir plusieurs branches 2 qui s'étendent selon la même direction.

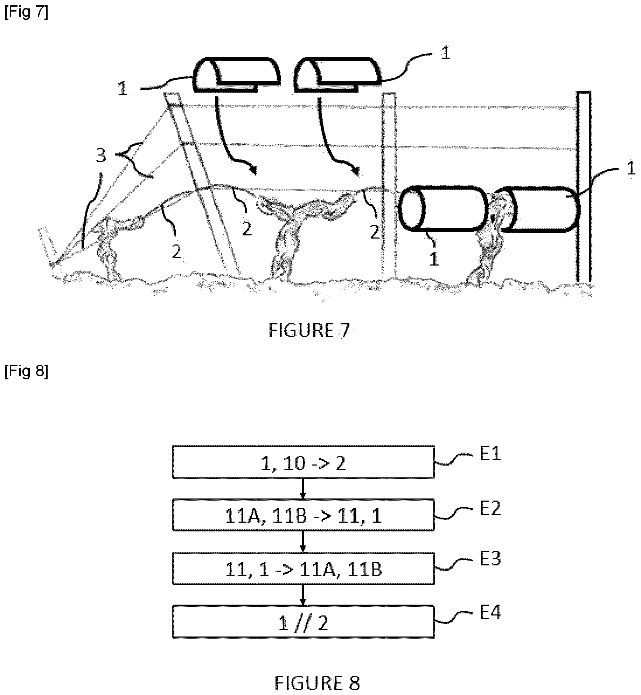

Sur la figure 7, une pluralité de manchons 1 courts sont représentés, recouvrant chacun une seule branche 2 des pieds de vigne.

### Corps 10

Dans la forme de réalisation illustrée sur la figure 3, le corps 10 déroulé est de forme rectangulaire, définissant deux côtés longs 101 opposés et deux côtés courts 102 opposés.

Dans cette forme de réalisation, le corps 10 est formé d'une pluralité de couches de polypropylène. Les propriétés anti-ultraviolets résultantes permettent de réduire le dégel dû aux rayons solaires et la solidité du matériau permet de protéger la branche 2 des intempéries. Une couche de polypropylène a des propriétés imperméables obtenues par l'utilisation d'un traitement qui permettent de réduire le volume d'eau qui pourrait atteindre la branche 2 et geler sur les bourgeons.

Alternativement, les propriétés imperméables peuvent être obtenues par l'utilisation d'un traitement de surface hydrophobe sur la surface du corps 10 destinée à être à l'extérieur.

Le corps 10 peut être également réalisé par un tressage de matériau, ce qui renforce la perméabilité à l'air pour éviter la stagnation à l'intérieur du manchon 1.

Dans cette forme de réalisation, le corps 10 est configuré pour être placé autour de la branche 2 de façon que les deux côtés longs 101 soient mis en vis-à-vis comme représenté sur la figure 2.

Dans la forme de réalisation illustrée sur la figure 4, le corps 10 comprend deux coques 103 rigides en vis-à-vis reliées par une articulation 104. L'articulation 104 est réalisée par exemple en plastique ou en métal.

### Chaque coque 103 présente un côté long 101 opposé à l'articulation 104.

Les organes de fixation 11 permettent de fermer le manchon 1 en fixant les deux côtés longs 101 mis en vis-à-vis autour de la branche 2 dans la première forme de réalisation ou de fixer les deux coques 103 dans la deuxième forme de réalisation.

Les deux coques 103 comprennent une armature en plastique et un extérieur réalisé par empilement d'une pluralité de couches de polypropylène comme présenté.

Dans une autre forme de réalisation représenté sur la figure 5, le corps 10 comprend un matériau à mémoire de forme, flexible et/ou élastique, qui est préformé pour avoir en mémoire la forme du manchon 1 enroulé.

Dans cette forme de réalisation, le manchon 1 ne comprend pas d'organe de fixation 11.

### Organe de fixation 11

Dans les formes de réalisation illustrées sur les figures 2 à 4, les organes de fixation 11 sont fixés le long des côtés longs 101 du corps 10. De préférence les organes de fixation 11 sont en deux parties complémentaires 11A, 11B, avec une partie 11A sur un des côtés longs 101 et la partie complémentaire 11B correspondante qui est sur l'autre côté long 101.

Sur les figures 2 à 3, les organes de fixation 11 sont au nombre de trois et consistent en des boutons-fermoirs aimantés. La partie 11A est le pôle nord magnétique du bouton-fermoir aimanté 11 et la partie 11B est le pôle sud magnétique du bouton-fermoir aimanté 11. Les boutons-fermoirs aimantés 11 sont réalisés dans un matériau magnétique et peuvent comprendre une enveloppe réalisée par exemple en plastique ou en métal.

Sur la figure 4, les organes de fixation 11 sont au nombre de trois et consistent en des bandes auto-agrippantes (appelées aussi « scratch »). La partie 11A est une bande comprenant un ensemble de crochets textiles et la partie 11B est une bande comprenant un ensemble de boucles textiles qui permettent d'accrocher et de décrocher rapidement et solidement les deux parties complémentaires 11A, 11B.

Alternativement, il pourrait n'y avoir un seul organe de fixation 11 dont les deux parties complémentaires 11A, 11B s'étendent sur une partie de la longueur de chaque côté long 101.

Dans les formes de réalisation représentées sur les figures 2 à 4, les deux parties 11A, 11B de chaque organe de fixation 11 sont situées sur la même face du corps 10.

Alternativement, les deux parties complémentaires 11A, 11B pourraient être situées sur des faces différentes du corps 10.

### Branche 2

La branche 2 est une branche de végétal qui pousse depuis un tronc ou depuis un pied dans le cas d'une branche de vigne (dans ce cas, elle est aussi appelée « aste » dans le domaine de la viticulture).

Dans certains cas, comme pour une branche de vigne, la branche 2 est attachée à un fil 3 métallique qui guide sa croissance comme représenté sur les figures 1, 6 et 7.

Le manchon 1 est enroulé autour de la branche 2 afin de protéger les pousses et les bourgeons présents sur ladite branche 2 du gel, des intempéries et des chocs lors de leur croissance afin d'assurer la récolte une fois les fruits arrivés à maturité.

Comme représenté sur les figures 6, le manchon 1 peut recouvrir une pluralité de branches 2, comme dans le cas sur des pieds de vignes dont plusieurs branches peuvent s'étendre sur un même fil 3 métallique.

### Exemple de mise en œuvre

### Le procédé d'utilisation d'un manchon 1 est représenté sur la figure 8.

Initialement, comme représenté sur les figures 6 et 7, le manchon 1 est ouvert, c'est-à-dire que les organes de fixation 11 ne sont pas fixés entre eux.

Le corps 10 est ensuite placé dans une étape E1 sur la branche 2 à protéger. Dans le cas où la branche 2 est fixée à un fil 3, le manchon 1 est aussi configuré pour entourer le fil 3 en plus de la branche 2 comme représenté sur la figure 2.

Dans la forme de réalisation représentée sur les figures 2 et 3, un utilisateur enroule lors de l'étape E1 le corps 10 souple du manchon 1 de façon à former un cylindre autour de la branche 2 à protéger. Ce faisant, les deux côtés longs 101 sont rapprochés et les parties complémentaires 11A, 11B des organes de fixation 11 sont mises en vis-à-vis.

Dans la forme de réalisation représentée sur la figure 4, l'utilisateur referme lors de l'étape E1 les deux coques 103 du manchon 1 de façon à former un cylindre autour de la branche 2 à protéger. Ce faisant les deux côtés longs 101 sont rapprochés et les parties complémentaires 11A, 11B des organes de fixation 11 sont mises en vis-à-vis.

L'utilisateur ferme dans l'étape E2 les organes de fixation 11 en fonction du type d'organe de fixation 11, comme mettre en contact les parties 11A nord et 11B sud des boutons-fermoirs aimantés 11, comme dans l'exemple représenté sur les figures 2 et 3, ou bien en accrochant les bandes auto-agrippantes 11A, 11B, comme dans l'exemple représenté sur la figure 4.

Comme représenté sur les figures 6 et 7, le manchon 1 protège alors une branche 2 ou une pluralité de branches 2 en fonction de sa taille et de la disposition des branches 2.

La forme cylindrique du manchon 1 réalisé dans une de ces formes de réalisation permet une bonne circulation de l'air à l'intérieur du manchon 1, puisque le cylindre est ouvert à ses extrémités. Le corps 10 étant imperméable et filtrant les rayons ultraviolets, le manchon 1 assure aussi son rôle de protection physique contre des éléments extérieurs et offre une protection accrue contre le gel pendant les périodes froides de l'années.

En journée ou bien encore lorsque les températures sont plus clémentes, l'utilisateur décroche dans une étape E3 les parties complémentaires 11A, 11B des organes de fixation 11 pour pouvoir retirer dans une étape E4 le manchon 1 et laisser la branche 2 pousser à l'air libre.

Dans le cas où le corps 10 comprend un matériau à mémoire de forme, il n'y a pas besoin d'organes de fixation 11. La propriété flexible du corps 10 permet alors à un utilisateur de déformer le manchon 1 pour le placer autour de la branche 2, et le matériau à mémoire de forme reforme le manchon 1 autour de la branche 2 sans opération supplémentaire de la part de l'utilisateur.

L'étape E1 consiste alors à écarter le corps 10 du manchon 1 et le positionner autour de la branche 2, et l'étape E2 consiste seulement à laisser le manchon 1 reprendre sa forme.

Le retrait du manchon 1 se fait de façon inverse sans nécessiter d'ouvrir des organes de fixation 11. Il n'y a pas d'étape E3, juste une étape E4 consistant en la déformation du manchon 1 pour l'ouvrir et le retirer de la branche 2.

## Revendications

1. Manchon (1) de protection détachable pour branche (2) de vigne, ledit manchon (1) comprenant un corps (10) configuré pour être placé autour de ladite branche (2), ledit corps (10) étant perméable à l'air et anti-ultraviolets.

2. Manchon (1) selon la revendication 1, dans lequel le corps (10) comprend des organes de fixation (11) complémentaires montés sur ledit corps (10) et permettant de fixer le corps (10) autour de ladite branche (2) de manière détachable.

3. Manchon (1) selon la revendication précédente, dans lequel les organes de fixation (11) complémentaires sont disposés le long de deux côtés longs (101) du corps (10).

4. Manchon (1) selon l'une quelconque des revendications 2 ou 3, dans lequel les organes de fixation (11) complémentaires comprennent au moins un système de bouton-fermoir aimanté (11A, 11B) et/ou des bandes en matériau auto-agrippant.

5. Manchon (1) de protection selon l'une quelconque des revendications précédentes, dans lequel le corps (10) est imperméable à l'eau.

6. Manchon (1) selon l'une quelconque des revendications précédentes, dans lequel le corps (10) est constitué d'un matériau souple ou semi-rigide.

7. Manchon (1) selon la revendication précédente, dans lequel le corps (10) comporte une couche constituée d'un matériau anti-ultraviolets ou dans lequel la surface externe du corps (10) est recouverte d'un revêtement anti-ultraviolets.

8. Manchon (1) selon l'une quelconque des revendications précédentes, dans lequel le corps (10) comprend un matériau flexible à mémoire de forme, ledit matériau ayant en mémoire la forme du manchon (1) enroulé autour de ladite branche (2).

9. Manchon (1) selon l'une quelconque des revendications 1 à 7, dans lequel le corps (10) comprend une pluralité de coques (103) rigides ou semi-rigides reliées par au moins une articulation (104).

10. Procédé d'utilisation d'un manchon (1) selon l'une quelconque des revendications 2 à 9, ledit procédé comprenant une étape (E1) de placement du corps (10) du manchon (1) autour de la branche (2) à protéger et une étape (E2) d'attachement des organes de fixation (11) pour fixer le manchon (1) autour de la branche (2).
